# EUROPÄISCHE PATENTANMELDUNG

(11) **EP 3 699 662 A1**
(43) Veröffentlichungstag der Anmeldung: **26.08.2020**
(21) Anmeldenummer: 19157993.7
(22) Anmeldetag: 19.02.2019
(51) Int. Cl.: G02B 7/02, B60Q 1/04, F21S 41/19

(54) **ABBILDUNGSVORRICHTUNG UND LICHTMODUL FÜR EINEN KRAFTFAHRZEUGSCHEINWERFER**

(71) Anmelder: ZKW Group GmbH, 3250 Wieselburg (AT)
(72) Erfinder: Stadler, Peter, 3654 Raxendorf (AT); Fahrngruber, Manuel, 3252 Petzenkirchen (AT); Hauer, Clemens, 3261 Steinakirchen am Forst (AT); Schoderböck, Peter Martin, 3332 Rosenau am Sonntagberg (AT)
(74) Vertreter: Patentanwaltskanzlei Matschnig & Forsthuber OG

(57) **Zusammenfassung**

Abbildungsvorrichtung (1) für ein Kraftfahrzeuglichtmodul umfassend eine Linse (2) und einen Linsenhalter (3), wobei die Linse ein erstes Segment (4) und ein zweites Segment (5) aufweist, wobei das zweite Segment (5) dem ersten Segment (4) in axialer Richtung (X) der Abbildungsvorrichtung (1) nachgeordnet ist und eine umlaufende Stirnfläche (50) aufweist, wobei
der Linsenhalter (3) eine hülsenförmige Aufnahme (6) aufweist, in der das erste Segment (5) der Linse (2) eingefasst ist, wobei die hülsenförmige Aufnahme (6) eine umlaufende Stirnwand (60) aufweist, wobei die umlaufende Stirnwand (60) zumindest teilweise an der umlaufenden Stirnfläche (50) anliegt, wobei eine Außenfläche (51) des zweiten Segments (5) der Linse (2) in eine Mantelfläche (61) der hülsenförmigen Aufnahme (6) des Linsenhalters (3) stufenlos übergeht, wobei die hülsenförmige Aufnahme (6) an ihrer Innenseite ein Eingriffsmittel (62) aufweist, welches in ein dem Eingriffsmittel (62) korrespondierendes, an dem ersten Segment (4) der Linse ausgebildetes Gegeneingriffsmittel (40) eingreift, wodurch eine formschlüssige Verbindung zwischen der Linse (2) und dem Linsenhalter (3) gebildet ist.

## Beschreibung

Die Erfindung betrifft eine Abbildungsvorrichtung für ein Kraftfahrzeuglichtmodul umfassend eine Linse und einen vorzugsweise lichtundurchlässigen beziehungsweise undurchsichtigen Linsenhalter, in dem die Linse gehalten ist, wobei die Linse ein erstes Segment und ein zweites Segment aufweist, wobei das zweite Segment dem ersten Segment in axialer Richtung der Abbildungsvorrichtung nachgeordnet ist und eine umlaufende Stirnfläche aufweist, wobei der Linsenhalter eine hülsenförmige Aufnahme aufweist, in der das erste Segment der Linse eingefasst ist. Besonders geeignet ist die Abbildungsvorrichtung für ein Projektionsmodul eines Kraftfahrzeugs beziehungsweise eines Kraftfahrzeugscheinwerfers.

Außerdem betrifft die Erfindung ein Lichtmodul für einen Kraftfahrzeugscheinwerfer mit zumindest einer solchen Abbildungsvorrichtung.

Darüber hinaus betrifft die Erfindung ein Kraftfahrzeugscheinwerfer mit zumindest einem vorgenannten Lichtmodul.

Abbildungsvorrichtungen für Kraftfahrzeugscheinwerferlichtmodule sind aus dem Stand der Technik bekannt. Bei den herkömmlichen Abbildungsvorrichtungen werden die Linsen in den Linsenhaltern durch eine Rastverbindung gehalten. Diese Rastverbindungen weisen linsenhalterseitig typischerweise große Rasthaken mit großen länglichen, sich in Axialrichtung der Abbildungsvorrichtung erstreckenden Ausnehmungen, die für die Federung und den Toleranzausgleich in dem Linsenhalter gebildet sind. Um diese Technischen Schnittstellen zu verdecken, wird normalerweise eine zusätzliche Blende vorgesehen. Abgesehen davon, dass die Blende an der Abbildungsvorrichtung schwer positionierbar ist, führt dies dazu, dass die gesamte Abbildungsvorrichtung, die aus der Linse, dem Linsenhalter und der zusätzlichen Blende besteht, sehr sperrig wird.

Die Aufgabe der vorliegenden Erfindung besteht darin, die Nachteile des Stands der Technik zu beseitigen und eine Abbildungsvorrichtung bereitzustellen, die weniger Bauraum erfordert und bei der die Montageschnittstellen zwischen Linse und Linsenhalter von außen nicht sichtbar sind.

Die Aufgabe wird mit einer Abbildungsvorrichtung der oben genannten Art erfindungsgemäß dadurch gelöst, dass die hülsenförmige, vorzugsweise massive Aufnahme eine umlaufende Stirnwand aufweist, wobei die umlaufende Stirnwand im montierten Zustand, d.h. in dem Zustand, in dem der Linsenhalter die Linse hält, zumindest teilweise an der umlaufenden Stirnfläche anliegt, wobei eine Außenfläche des zweiten Segments der Linse in eine Mantelfläche der hülsenförmigen Aufnahme des vorzugsweise massiven Linsenhalters im montierten Zustand stufenlos übergeht, wobei die, vorzugsweise massive hülsenförmige Aufnahme an ihrer Innenseite ein Eingriffsmittel aufweist, welches in ein dem Eingriffsmittel korrespondierendes, an dem ersten Segment der Linse ausgebildetes Gegeneingriffsmittel eingreift, wodurch eine formschlüssige Verbindung zwischen der Linse und dem vorzugsweise massiven Linsenhalter gebildet ist.

Unter dem Begriff "umlaufende Stirn-, Berührungsfläche" beziehungsweise "umlaufende Stirnwand" wird eine ringförmige, insbesondere abschnittweise ringförmige, um die axiale Richtung verlaufende und in einer Ebene liegende Fläche verstanden. Die Ebene steht vorzugsweise zu der axialen Richtung unter einem nicht verschwindenden, insbesondere unter rechtem Winkel, so dass, wenn die umlaufende Stirnwand an der umlaufenden Stirnfläche anliegt und gegen diese drückt, die formschlüssige Verbindung noch verstärkt wird.

Vorzugsweise sind/ist die umlaufende Stirnfläche und/oder die umlaufende Stirnwand in sich geschlossen.

Es versteht sich, dass die entsprechenden Flächen - also die Stirnfläche, die Stirnwand, die Außenfläche und die Mantelfläche - in einem nichtmontierten Zustand entsprechende zueinander passende Verläufe aufweisen, die den hier beschriebenen montierten Zustand ermöglichen.

Es kann zweckmäßig sein, wenn die umlaufende Stirnfläche der hülsenförmigen Aufnahme zugewandt ist, beispielsweise der umlaufenden Stirnwand gegenüberliegt, und vorzugsweise sowohl die umlaufende Stirnwand als auch die umlaufende Stirnfläche im Wesentlichen senkrecht zu der axialen Richtung der Abbildungsvorrichtung angeordnet sind.

Es kann mit Vorteil vorgesehen sein, dass das Eingriffsmittel massiv ausgebildet ist. Beispielsweise ist das Eingriffsmittel einstückig mit dem Linsenhalter ausgebildet.

Insbesondere bildet das Eingriffsmittel eine monolithische Struktur mit dem Linsenhalter und ist vorzugsweise aus dem gleichen Material.

Aufgrund eines massiven, wie z.B. ganz aus dem gleichen Material bestehenden, Eingriffsmittels ist es möglich, eine bessere Abschattung des Streulichts zu ermöglichen, da wenn das Eingriffsmittel lichtundurchlässig beziehungsweise undurchsichtig ist, es die Rolle einer Blende übernimmt und das Streulicht absorbiert - dies ist ein lichttechnischer Vorteil eines massiven Eingriffsmittels. Darüber hinaus, da das Eingriffsmittel massiv sein kann, ist es möglich, die Form des Eingriffsmittels in einem großen Rahmen zu variieren, wodurch sehr beständiges Eingriffsmittel erreicht werden kann, das verschiedene Tests, wie beispielsweise unten beschriebene mechanische Schock-Tests bestehen kann - dies ist ein mechanischer Vorteil eines massiven Eingriffsmittels.

Bei einer bevorzugten Ausführungsform kann das Eingriffsmittel an einem an dem zweiten Segment anliegenden Endbereich der hülsenförmigen Aufnahme angeordnet sein.

Außerdem können sich weitere Vorteile ergeben, wenn das Eingriffsmittel zwei oder mehr umlaufend angeordnete Erhebungen und beispielsweise weitere Eingriffselemente, wie Rastnasen umfasst.

Bei einer besonders vorteilhaften Ausführungsform kann vorgesehen sein, dass das Eingriffsmittel zwei längliche Erhebungen umfasst, die einender gegenüber liegen und sich vorzugsweise in eine zu der axialen Richtung orthogonale Richtung erstrecken.

Darüber hinaus können sich weitere Vorteile ergeben, wenn jede Erhebung einen Anstiegsbereich und eine Stirnseite aufweist, wobei der Anstiegsbereich in die Stirnseite mündet, wobei die Stirnseite der umlaufenden Stirnwand der hülsenförmigen Aufnahme abgewandt ist, der umlaufenden Stirnwand der hülsenförmigen Aufnahme in axialer Richtung gegenüberliegt, mit dem Gegeneingriffsmittel in Eingriff steht und vorzugsweise zu der axialen Richtung senkrecht angeordnet ist.

Bei einer bevorzugten Ausführungsform kann das Gegeneingriffsmittel zumindest einen Vertiefungsbereich und/oder zumindest eine umlaufende Nut umfassen. Die Nut muss nicht in Umlaufrichtung in sich geschlossen sein, sondern kann aus mehreren Nuten beziehungsweise Nut-Segmenten oder Nut-Bereichen gebildet sein. Vorzugsweise können diese Nuten beziehungsweise Nut-Bereiche auf einer gedachten in sich geschlossenen Umlauflinie angeordnet sein.

Weitere Vorteile ergeben sich, wenn der zumindest eine Vertiefungsbereich nach innen verjüngend ausgebildet ist und eine erste nach außen geschrägte Wand aufweist, die zumindest einen Teil der umlaufenden Stirnfläche bildet und gegen den die umlaufende Stirnwand in die axiale Richtung drückt, wobei die Stirnseite der Erhebung gegen eine zweite nach außen geschrägte Wand des zumindest einen Vertiefungsbereichs in eine der axialen Richtung entgegengesetzte Richtung drückt.

Weiters kann es von Vorteil sein, wenn die hülsenförmige Aufnahme aus einem federnden Material, vorzugsweise aus einem thermoplastischen Kunststoff ausgebildet ist und die formschlüssige Verbindung zwischen der Linse und dem Linsenhalter vorzugsweise eine Rastverbindung ist.

Es kann darüber hinaus mit Vorteil vorgesehen sein, dass die Außenfläche des zweiten Segments der Linse stufenlos verläuft und vorzugsweise die gesamte Lichtaustrittsfläche der Linse umfasst.

Es kann dabei zweckmäßig sein, wenn die axiale Richtung mit der optischen Achse der Linse zusammenfällt.

Weitere Vorteile ergeben sich, wenn an einer Innenseite eines zu der hülsenförmigen Aufnahme komplementären Teilstücks des Linsenhalters eine Beschichtung oder Schutzblende vorgesehen ist, wobei die Beschichtung vorzugsweise ein wärmewiderstandsfähiges Material umfasst, beispielsweise aus Kunststoff, wie PBT-GF30, PET-GF30, PET-GF35, oder Metall, beispielsweise Aluminium oder Stahl, ausgebildet ist. Dabei umfasst der Begriff Aluminium auch Aluminiumlegierungen wie AlMg3 und A199,5. Eine solche Schutzblende schützt das Material der Innenseite vor einem so genannten Brennglaseffekt. Der Brennglaseffekt tritt auf, wenn einfallende Sonnenstrahlen durch eine Linse beziehungsweise eine Optik auf ein Lichtmodul-Element, wie ein Linsenhalter fokussiert werden und Schäden an diesem Element verursachen.

Weiters kann es vorgesehen sein, dass sich das erste Segment in eine der axialen Richtung entgegengesetzte Richtung verjüngt.

Dabei kann es vorgesehen sein, wenn das erste Segment pyramidenstumpfförmig ausgebildet ist.

Es kann darüber hinaus mit Vorteil vorgesehen sein, dass dem ersten Segment zwei Referenzflächen zugeordnet sind, wobei die Referenzflächen einander gegenüberliegen und aufeinander in eine der axialen Richtung entgegengesetzte Richtung zulaufen, vorzugsweise unter einem vorgegebenen Winkel aufeinander zulaufen, wobei der Winkel vorzugsweise in einem Bereich zwischen 3° und 10° liegt.

Die Referenzflächen sind gedachte Flächen. Der vorgegebene Winkel, der von der Linsenhöhe abhängig sein kann, entspricht dem Winkel, unter dem der Linsenhalter in das erste Segment eingreift. Da vorteilhafterweise lichtundurchlässige beziehungsweise undurchsichtige Linsenhalter beziehungsweise Linsenhalter aus einem lichtundurchlässigen Material verwendet werden, wird die Lichtfortpflanzung in dem ersten Segment und in der Abbildungsvorrichtung auf den vorgegebenen Winkel beschränkt. Besonders vorteilhaft sind glatte, durchgehende, d.h. kontinuierliche/stetige Referenzflächen.

Darüber hinaus wird die Aufgabe mit einem Lichtmodul für einen Kraftfahrzeugscheinwerfer gelöst, das zumindest eine vorgenannte Abbildungsvorrichtung und zumindest eine Lichtquelle, vorzugsweise halbleiterbasierte Lichtquelle, wie eine LED-Lichtquelle umfasst.

Die Erfindung samt weiteren Vorteilen ist im Folgenden an Hand beispielhafter Ausführungsformen näher erläutert, die in der Zeichnung veranschaulicht sind. In dieser zeigt
- Fig. 1: ein Kraftfahrzeugscheinwerferlichtmodul;
- Fig. 2: eine Schnittdarstellung eines Vorderteils der Abbildungsvorrichtung;
- Fig. 3: eine vergrößerte perspektivische Darstellung eines Linsenhalters, und
- Fig. 4a und 4b: zwei unterschiedliche Ansichten der Linse der Figur 1 und 2.

In den folgenden Figuren bezeichnen - sofern nicht anders angegeben - gleiche Bezugszeichen gleiche Merkmale.

Die Figuren sind schematische Darstellungen, die lediglich jene Bestandteile zeigen, die für eine Erklärung der Erfindung hilfreich sein können. Der Fachmann erkennt sofort, dass ein einsatzfähiges Kraftfahrzeugscheinwerferlichtmodul mit einer Abbildungsvorrichtung, die einer erfindungsgemäßen Abbildungsvorrichtung entspricht, eine Vielzahl weiterer, hier nicht gezeigter Bestandteile, wie Ein- und Verstelleinrichtungen, elektrische Versorgungsmittel etc., aufweist.

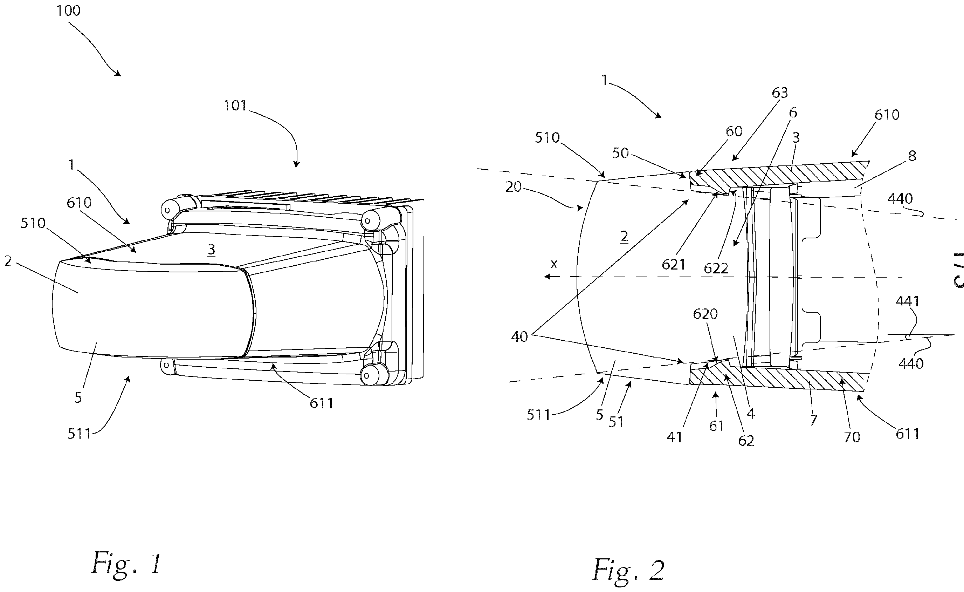

Figur 1 zeigt ein Kraftfahrzeugscheinwerferlichtmodul **100** mit einer Abbildungsvorrichtung **1**, die einer erfindungsgemäßen Abbildungsvorrichtung im montierten Zustand entspricht. Die Abbildungsvorrichtung 1 weist eine Linse **2** und einen Linsenhalter **3** auf. Wenn die Linse 2 mit dem Linsenhalter 3 formschlüssig verbunden ist, verläuft die Außenfläche der Abbildungsvorrichtung 1 stufenlos und weist keine kantigen Übergänge auf. Beispielsweise ist die Verbindung zwischen der Linse 2 und dem Linsenhalter 3 eine Rastverbindung. Der Linsenhalter 3 ist an einem Kühlkörper **101** befestigt, wobei der Kühlkörper 101 zum Kühlen von Lichtquelle(n) vorgesehen ist. Die (hier nicht sichtbare(n)) Lichtquelle(n) können halbleiterbasierte Lichtquelle(n), wie LED-Lichtquelle(n) sein.

Figur 2 lässt erkennen, dass die Linse ein erstes Segment **4** und ein zweites Segment **5** aufweist, wobei das zweite Segment 5 dem ersten Segment 4 in axialer Richtung **X** der Abbildungsvorrichtung 1 nachgeordnet ist. Die axiale Richtung X der Abbildungsvorrichtung 1 fällt vorzugsweise mit der optischen Achse des Kraftfahrzeugscheinwerferlichtmoduls 100 und/oder der Linse 2 zusammen. Im Zusammenhang mit der vorliegenden Erfindung wird unter dem Begriff optische Achse der Weg jenes Strahls verstanden, der beim Durchgang durch das optische System die kleinste Ablenkung erfährt. Die Linse **2** selbst kann als ein beispielsweise relativ massiver Optikkörper ausgebildet sein.

Weiters ist in Figur 1 erkennbar, dass der Linsenhalter 3 ein schlauchförmiges Gehäuse aufweisen kann. Das Gehäuse bildet eine Kammer, die Platz für das erste Segment 4 der Linse 2 bietet. Konkret weist der Linsenhalter 3 eine hülsenförmige Aufnahme **6** auf, in der das erste Segment 4 der Linse 2 eingefasst ist. Die Aufnahme 6 berührt somit innenflächenseitig eine Außenfläche des ersten Segments 4 der Linse 2. Der Linsenhalter 3 kann sich in Richtung Linse 2 verjüngen. In montiertem Zustand ist das erste Segment 4 der Linse 2 im Vergleich zu dem zweiten Segment 5 nach außen nicht sichtbar. Die hülsenförmige Aufnahme 6 weist außerdem an ihrem dem zweiten Segment 5 zugewandten Ende **63** eine umlaufende Stirnwand **60** auf. Die umlaufende Stirnwand 60 ist im Wesentlichen senkrecht zu der axialen Richtung X angeordnet. Die umlaufende Stirnwand 60 liegt zumindest teilweise an einer umlaufenden Stirnfläche **50** des zweiten Segments 5 der Linse 2 an und drückt gegen diese in Axialrichtung X. Besonders in Figur 1 ist gut erkennbar, dass die umlaufende Stirnwand 60 die umlaufende Stirnfläche 50 entlang einer ebenfalls umlaufenden Berührungsfläche berührt und, wie oben beschrieben, gegen diese drückt. Vorzugsweise ist die Berührungsfläche in sich geschlossen. Die umlaufende Stirnfläche 50 ist vorzugsweise senkrecht zu der axialen Richtung X angeordnet. Weiterhin ist den Figuren 1 und 2 zu entnehmen, dass eine Außenfläche **51** des zweiten Segments 5 der Linse 2 in eine Mantelfläche **61** beziehungsweise Außenfläche der hülsenförmigen Aufnahme 6 des Linsenhalters 3 stufenlos übergeht. Beispielsweise lässt die Figur 2, die eine Schnittdarstellung eines - in Axialrichtung X gesehen - Vorderteils der Abbildungsvorrichtung 1 ist, erkennen, dass zumindest ein Bereich der Außenfläche 51 mit einem entsprechenden Bereich der Mantelfläche 61 in einer gemeinsamen Ebene liegen kann und einander berühren kann. Konkret zeigt Figur 2 zwei solche Bereiche **510**, **511** der Außenfläche 51 und zwei jeweils dazu korrespondierende Bereiche **610**, **611** der Mantelfläche 61. Die Mantelfläche 61 weist vorzugsweise keine Bohrungen, Durchbrüche oder Ähnliches auf, sodass die hülsenförmige Aufnahme 6 von innen nach außen durchlässt, wenn sie aus einem lichtundurchlässigen Material ausgebildet ist.

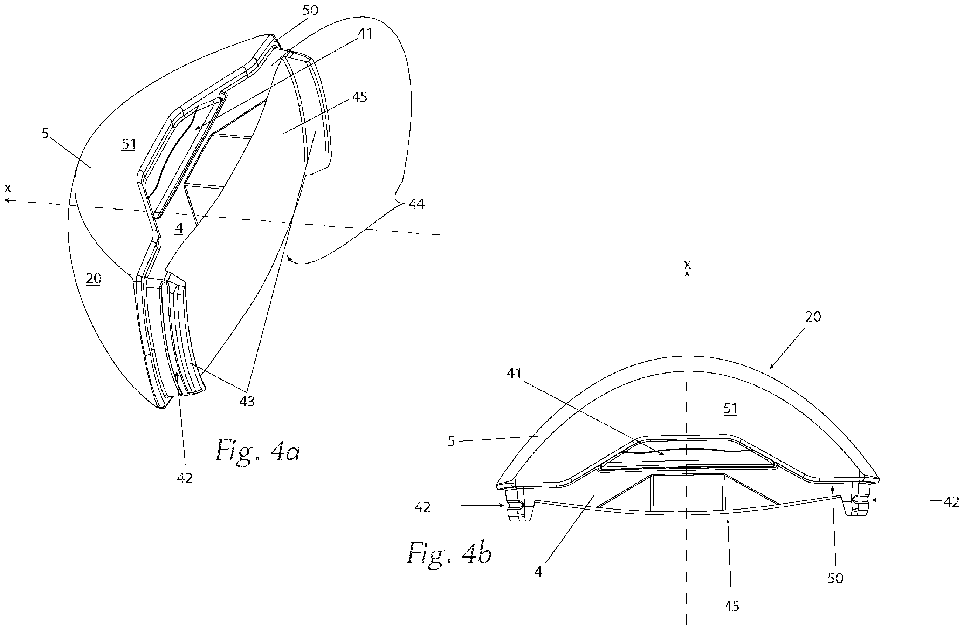

Figur 2 lässt weiterhin erkennen, dass sich das erste Segment 4 der Linse entgegen der axialen Richtung X verjüngen kann. Dabei bietet das erste Segment 4 an seinen Randflächen 44 mehr Platz für vorzugsweise massive Eingriffsmittel 62 und somit einen stabileren Halt der Linse 2 in dem Linsenhalter 3. Beispielsweise können die Eingriffsmittel 62 derart ausgebildet sein, dass sie einen Schock-Test bestehen können. Der Schock-Test wird als "mechanischer Schock" bezeichnet. Bei diesem Test wird mittels einer Sinusschwingung das Lichtmodul 100 in alle Achsen Beschleunigungen und Verzögerungen unterzogen und somit G-Kräfte (in Höhe von 50g) simuliert. Das erste Segment 4 kann beispielsweise pyramidenstumpfförmig ausgebildet sein. Darüber hinaus ist es denkbar, dass dem ersten Segment 4 zwei Referenzflächen 440 zugeordnet sind, welche einander gegenüberliegen und aufeinander in eine der axialen Richtung X entgegengesetzte Richtung zulaufen. Die Randflächen 44 sind vorzugsweise zu den Referenzflächen 440 referenziert, so dass die Randflächen 44 entsprechend den Referenzflächen 440 verlaufen. Dies ist besonders bei der Herstellung der Linse 2 und insbesondere bei dem Formen des ersten Segments 4 vorteilhaft, wenn der Verlauf der Randflächen 44 an den Verlauf der Referenzflächen 440 angepasst wird. Dabei können zumindest zwei einander gegenüberliegenden Randflächen 44 des ersten Segments 4 entsprechend der Referenzflächen 440 aufeinander zulaufen. Beispielsweise, wenn die Referenzflächen 440 unter einem vorgegebenen Winkel 441 aufeinander zulaufen, wobei der Winkel 441 vorzugsweise in einem Bereich zwischen 3° und 10° liegt, laufen die Randflächen 440 unter dem gleichen Winkel 441 aufeinander zu. Der Winkel 441 ist vorzugsweise derart vorgegeben, dass Licht, das in die Linse 2 durch ihre Lichteintrittsfläche 45 eingedrungen ist und an diesen Randflächen bricht beziehungsweise von diesen Flächen umgelenkt wird, nicht als Streu- beziehungsweise Fehllicht die Abbildungsvorrichtung 1 verlässt. Dadurch kann die Menge des Streulichts erheblich reduziert werden. In Figuren 4a und 4b ist zu erkennen, dass diese Randflächen 44 als Linsendach beziehungsweise Linsenboden ausgebildet sind - also in einem in einen Kraftfahrzeugscheinwerfer eingebauten Zustand eines die Abbildungsvorrichtung 1 umfassenden Lichtmoduls 100 (Figur 1) eine obere und eine untere Randfläche 44 der Linse 2 bilden. Diese Art die Randflächen 44 einer Linse beziehungsweise eines Linsensegments auszubilden ist unter dem Fachbegriff "Linsenbeschnitt" bekannt.

Um die Linse 2 in dem Linsenhalter 3 zu halten, weist die hülsenförmige Aufnahme 6 an ihrer Innenseite ein Eingriffsmittel **62** auf, welches in ein dem Eingriffsmittel 62 korrespondierendes, an dem ersten Segment 4 der Linse 2 ausgebildetes Gegeneingriffsmittel **40** eingreift, wodurch eine formschlüssige Verbindung zwischen der Linse 2 und dem Linsenhalter 3 gebildet ist. Das Eingriffsmittel 62 ist vorzugsweise an jenem Endbereich 63 der hülsenförmigen Aufnahme 6 angeordnet, an dem das zweite Segment 5 anliegt, und umfasst die umlaufende Stirnwand 60.

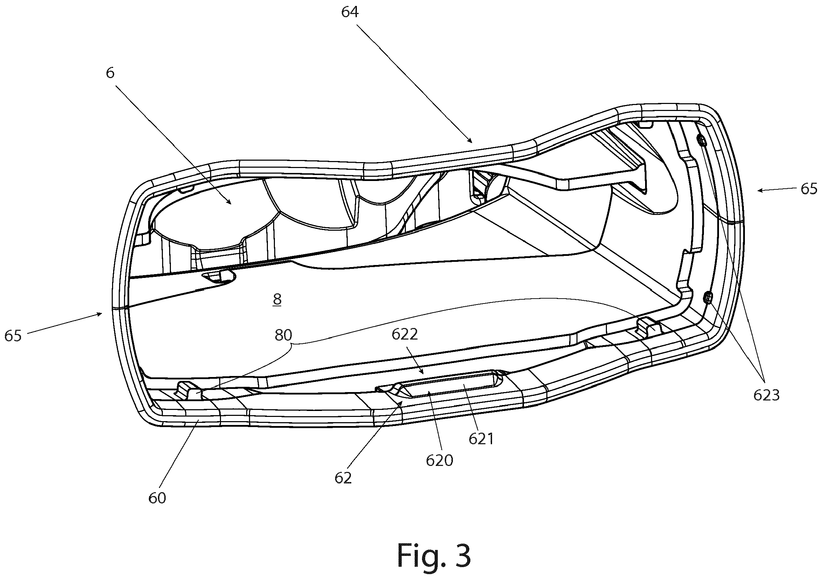

Das Eingriffsmittel 62, die hülsenförmige Aufnahme und der Linsenhalter können mit Vorteil massiv ausgebildet sein. Weiters lassen insbesondere Figuren 2 und 3 erkennen, dass das Eingriffsmittel 62 eine monolithische Struktur mit dem Linsenhalter 3 bilden kann. Das Eingriffsmittel 62 und der Linsenhalter 3 können aus dem gleichen Material bestehen. Es kann zweckmäßig sein, wenn zumindest die hülsenförmige Aufnahme 6 (und das Eingriffselement 62) aus einem federnden Material, vorzugsweise aus einem thermoplastischen Kunststoff ausgebildet ist und vorzugsweise aus diesem Material besteht. Es können beispielsweise thermoplastische Kunststoffe wie Polycarbonat oder Polyethylenterephthalat (PET) beziehungsweise Polybutylenterephthalat (PBT) beispielsweise glasfaserverstärktes PET beziehungsweise PBT, insbesondere glasfaserverstärktes PET mit 30 Gew.% oder 35 Gew.% Glasfasern beziehungsweise PBT mit 30 Gew.% Glasfasern - kurz PET-GF30 oder PET-GF35 beziehungsweise PBT-GF30 - verwendet werden.

Das erste Segment 4 der Linse 2 kann in die hülsenförmige Aufnahme 6 eingeführt werden, wobei die Aufnahme 6 beim Fügen des ersten Segments 4 nachgibt und zurückfedert, sobald das Eingriffsmittel 62 in das Gegeneingriffsmittel 40 eingreift, wodurch eine formschlüssige Verbindung, vorzugsweise eine Rastverbindung gebildet wird. In einer Raststellung der Linse 2 in dem Linsenhalter 3 verläuft die Außenfläche der Abbildungsvorrichtung 3 stufenlos und weist keine kantigen Übergänge auf (siehe Figur 1). Insbesondere ist die Außenkontur der Abbildungsvorrichtung 3 in sich geschlossen und weist keine Durchbrüche, Löcher o. Ä. auf.

Bei einer besonders günstigen Ausführungsform ist die formschlüssige Verbindung zwischen der Linse 2 und dem Linsenhalter 3 eine Rastverbindung. Dabei kann das Eingriffsmittel 62 zwei oder mehr umlaufend angeordnete (einzelne) Erhebungen **620** umfassen, die beispielsweise als Rastvorsprünge ausgebildet sein können. Weiters kann das Eingriffsmittel 62 weitere ebenfalls umlaufend angeordnete (einzelne) Eingriffselemente, wie Rastnasen **623** umfassen (siehe Figur 3). Beispielsweise kann das Eingriffsmittel 62 zwei längliche Erhebungen 620 umfassen, die in der Aufnahme einender (diametral) gegenüber liegen und sich vorzugsweise in eine zu der axialen Richtung X orthogonale Richtung erstrecken. Dabei kann jede Erhebung 620 einen Anstiegsbereich **621** und eine Stirnseite **622** aufweisen. Der Anstiegsbereich 621 mündet in die Stirnseite 622. Die Stirnseite 622 ist der umlaufenden Stirnwand 60 der hülsenförmigen Aufnahme 6 abgewandt und liegt der umlaufenden Stirnwand 60 der hülsenförmigen Aufnahme 6 in axialer Richtung X gegenüber. Die Stirnseite 622 kann zu der axialen Richtung X senkrecht angeordnet sein und steht vorzugsweise mit dem Gegeneingriffsmittel 40 in Eingriff. Die Erhebungen 620 sowie die Rastnasen 623 können massiv ausgeführt werden und können den vorgenannten Schock-Test bestehen. Vorzugsweise bilden das Eingriffsmittel 62 und folglich die Erhebungen 620 sowie die Rastnasen 623 mit dem Linsenhalter 3 eine monolithische Struktur, wodurch die hülsenförmige, lichtundurchlässige beziehungsweise undurchsichtige Aufnahme 6 des vorzugsweise lichtundurchsichtigen beziehungsweise undurchsichtigen Linsenhalters 3 eine verbesserte Abschattung des Streulichts ermöglicht. Massiv bezieht sich hierbei auch auf die Beschaffenheit des Materials der Aufnahme 6 beziehungsweise des Linsenhalters 3. Die hülsenförmige Aufnahme ist fest in ihrer physischen Form und durchgehend (lichtundurchlässig) in seiner lichttechnischen Funktion. Eine Kombination der aufeinander zulaufenden Randflächen 44 des ersten Segments 4 der Linse 2 mit der undurchsichtigen beziehungsweise lichtundurchlässigen hülsenförmigen Aufnahme 6 des Linsenhalters 3 ermöglicht eine besonders zuverlässige Reduktion des Streulichts. Wenn die Randflächen 44 unter dem vorgenannten Winkel aufeinander zulaufen, wird die Reduktion des Streulichts noch weiter verbessert.

Das Gegeneingriffsmittel 40 kann zumindest einen Vertiefungsbereich **41** und/oder zumindest eine umlaufende Nut **42** umfassen.

Zweckmäßigerweise weist der zumindest eine Vertiefungsbereich 41 und die umlaufend angeordneten Erhebungen 620 einander korrespondierende Form auf, sodass die Erhebungen 620 in den Vertiefungsbereich 41 eingreifen und in diesem verrasten können.

Figur 2 lässt erkennen, dass der Vertiefungsbereich 41 nach innen verjüngend ausgebildet ist und eine in trapezförmige Querschnitt aufweist. Dabei bildet eine erste nach außen geschrägte Wand des Vertiefungsbereichs 41 zumindest einen Teil der umlaufenden Stirnfläche 50, an der umlaufenden Stirnwand 60 anliegt. Die umlaufende Stirnwand 60 drückt gegen die umlaufende Stirnfläche 50 in die axiale Richtung X. Die Stirnseite 622 der Erhebung 620 drückt dabei gegen eine zweite nach außen geschrägte Wand des Vertiefungsbereichs 41 in eine der axialen Richtung X entgegengesetzte Richtung, wodurch die Linse 2 in dem Linsenhalter 3 gehalten werden kann.

Des Weiteren lässt die Figur 2 erkennen, dass die umlaufende Stirnfläche 50 zumindest teilweise einen Übergang von dem ersten Segment 4 in das zweite Segment 5 bildet (siehe auch Figuren 4a und 4b).

Darüber hinaus lässt die Figur 1 erkennen, dass die Außenfläche 51 des zweiten Segments 5 der Linse 2 stufenlos verläuft und vorzugsweise die gesamte Lichtaustrittsfläche 20 der Linse 2 umfasst (siehe auch Figuren 4a und 4b). Dabei wird die lichttechnische Austrittsfläche der Abbildungsvorrichtung - die Lichtaustrittsfläche 20 der Linse 2 - durch die Schnittstelle, d.h. die Verbindung Linse - Linsenhalter, nicht beeinträchtigt, wodurch die Linsenkonstruktion keine Performanceverluste verursacht.

Um Brennglaseffekt zu reduzieren, kann an einer Innenseite **70** eines zu der hülsenförmigen Aufnahme 6 komplementären Teilstücks **7** des Linsenhalters 3 eine Beschichtung **8** oder eine Schutzblende vorgesehen sein, die vorzugsweise ein wärmewiderstandsfähiges Material umfasst, beispielsweise aus Kunststoff oder Metall ausgebildet ist und vor dem Brennglaseffekt schützt.

Figur 3 - die die Aufnahme 6 von schräg vorne zeigt - lässt erkennen, dass die Beschichtung 8 als eine Schutzblende ausgebildet sein kann. Die Schutzblende ist vorzugsweise aus wärmewiderstandsfähigem Material ausgebildet. Das wärmewiderstandsfähige Material kann beispielsweise Kunststoff, wie PBT-GF30, PET-GF30, PET-GF35, oder Metall, wie Aluminium oder Stahl sein. Die Schutzblende 8 kann mittels dafür vorgesehener Halteelemente 80 in ihrer Position gehalten werden. Die Halteelemente 80 können mit dem Linsenhalter 3 eine monolithische Struktur bilden. Die Halteelemente 80 sind vorzugsweise an der Innenseite 70 des zu der hülsenförmigen Aufnahme 6 komplementären Teilstücks **7** des Linsenhalters 3 angeordnet sein.

Außerdem lassen Figuren 1 und 3 erkennen, dass die hülsenförmige Aufnahme 6 in etwa Form eines Rechtecks aufweist - vor allem, wenn man sie von vorn ansieht. Dabei ist jede Erhebung 620 in etwa der Mitte einer jeweiligen Längsseite 64 der hülsenförmigen Aufnahme 6 angeordnet. Die weiteren ebenfalls umlaufend angeordneten Rastnasen 623 können, wie in Figur 3 zu sehen ist, beispielsweise an Kurzseiten **65** der hülsenförmigen Aufnahme vorgesehen sein. Figur 3 zeigt zwei Rastnasen an einer der Kurzseiten 65, die anderen zwei Rastnasen sind nicht sichtbar. Es versteht sich, dass die Anordnung der Erhebungen 620 und der weiteren Eingriffselemente 623 von der in Figur 3 dargestellten Anordnung je nach Ausführungsform der Erfindung abweichen kann.

Figuren 4a und 4b, die zwei verschiedene Ansichten der Linse 2 zeigen, lassen erkennen, dass der Vertiefungsbereich 41 von oben gesehen trapezförmig ausgebildet ist. Außerdem zeigen die Figuren 4a und 4b, dass die optische Achse der Linse 2 mit der axialen Richtung X mit Vorteil zusammenfallen kann. Deutlich zu erkennen sind auch die umlaufende, vorzugsweise in sich geschlossene Stirnfläche 50 und die die gesamte Lichtaustrittsfläche 20 umfassende Außenfläche 51 des zweiten Segments 5 der Linse 2. Die Linse 2 kann zwei umlaufende Nuten 42 beziehungsweise eine umlaufende Nut aus zwei getrennten Nut-Segmenten 42 umfassen, wobei die getrennten Nut-Segmente 42 in derselben gedachten Umlauflinie liegen. Die Nuten 42 können beispielsweise an den Kurzseiten des rechteckförmig ausgebildeten ersten Segments 4 angeordnet sein. Weiters kann das erste Segment 4 in axialer Richtung X abstehende Federelemente **43** aufweisen, wobei die Nuten 42 in den Federelementen 43 ausgebildet sind. Figuren 4a und 4b lassen erkennen, dass die Federelemente als längliche, an einem Rand einer Lichteintrittsfläche des ersten Segments 4 angeordnete Laschen 43 ausgebildet sein können, die sich entlang der Umlaufrichtung erstrecken. Die Federelemente 43 bilden vorzugsweise eine monolithische Struktur mit dem ersten Segment 4 und bestehen vorzugsweise aus demselben Material. In einer Raststellung der Linse 2 in dem Linsenhalter 3 greifen die weiteren Eingriffselemente 623, beispielsweise Rastnasen in die entsprechende Nut 42 ein.

Es ist ersichtlich, dass Abänderungen und/oder Hinzufügungen von Teilen an dem zuvor beschriebenen Lichtmodul für einen Kraftfahrzeugscheinwerfer beziehungsweise an der zuvor beschriebenen Abbildungsvorrichtung erfolgen können, ohne dass vom Gebiet und Umfang der vorliegenden Erfindung abgewichen wird.

Ebenfalls ersichtlich ist, dass die Erfindung zwar in Bezug auf einige konkrete Beispiele beschrieben worden ist, ein Fachmann jedoch sicher in der Lage sein sollte, viele andere entsprechende Formen eines Lichtmoduls für einen Kraftfahrzeugscheinwerfer oder einer Abbildungsvorrichtung zu erhalten, die die in den Ansprüchen dargelegten Eigenschaften aufweisen und damit alle in den dadurch festgelegten Schutzumfang fallen.

Die Bezugsziffern in den Ansprüchen dienen lediglich zum besseren Verständnis der vorliegenden Erfindungen und bedeuten auf keinen Fall eine Beschränkung der vorliegenden Erfindungen.

## Patentansprüche

1. Abbildungsvorrichtung (1) für ein Kraftfahrzeuglichtmodul umfassend eine Linse (2) und einen Linsenhalter (3), in dem die Linse (2) gehalten ist, wobei
die Linse ein erstes Segment (4) und ein zweites Segment (5) aufweist, wobei das zweite Segment (5) dem ersten Segment (4) in axialer Richtung (X) der Abbildungsvorrichtung (1) nachgeordnet ist und eine umlaufende Stirnfläche (50) aufweist, wobei
der Linsenhalter (3) eine hülsenförmige Aufnahme (6) aufweist, in der das erste Segment (4)
der Linse (2) eingefasst ist, wobei
die hülsenförmige Aufnahme (6) eine umlaufende Stirnwand (60) aufweist, wobei die umlaufende Stirnwand (60) zumindest teilweise an der umlaufenden Stirnfläche (50) anliegt, wobei
eine Außenfläche (51) des zweiten Segments (5) der Linse (2) in eine Mantelfläche (61) der hülsenförmigen Aufnahme (6) des Linsenhalters (3) stufenlos übergeht, wobei
die hülsenförmige Aufnahme (6) an ihrer Innenseite ein Eingriffsmittel (62) aufweist, welches in ein dem Eingriffsmittel (62) korrespondierendes, an dem ersten Segment (4) der Linse ausgebildetes Gegeneingriffsmittel (40) eingreift, wodurch eine formschlüssige Verbindung zwischen der Linse (2) und dem Linsenhalter (3) gebildet ist.

2. Abbildungsvorrichtung nach Anspruch 1, wobei die umlaufende Stirnfläche (50) der hülsenförmigen Aufnahme (6) zugewandt ist, beispielsweise der umlaufenden Stirnwand (60) gegenüberliegt, und vorzugsweise sowohl die umlaufende Stirnwand (60) als auch die umlaufende Stirnfläche (50) im Wesentlichen senkrecht zu der axialen Richtung (X) der Abbildungsvorrichtung (1) angeordnet sind.

3. Abbildungsvorrichtung nach Anspruch 1 oder 2, wobei das Eingriffsmittel (62) massiv ausgebildet ist, beispielsweise eine monolithische Struktur mit dem Linsenhalter (3) bildet, vorzugsweise aus dem gleichen Material ist.

4. Abbildungsvorrichtung nach einem der Ansprüche 1 bis 3, wobei das Eingriffsmittel (62) an einem an dem zweiten Segment (5) anliegenden Endbereich (63) der hülsenförmigen Aufnahme (6) angeordnet ist.

5. Abbildungsvorrichtung nach einem der Ansprüche 1 bis 4, wobei das Eingriffsmittel (62) zwei oder mehr umlaufend angeordnete Erhebungen (620) und beispielsweise weitere Eingriffselemente (623), insbesondere Rastnasen, umfasst, wobei das Eingriffsmittel (62) vorzugsweise zusätzlich zwei längliche Erhebungen (620) umfasst, die einander gegenüber liegen und sich vorzugsweise in eine zu der axialen Richtung (X) orthogonale Richtung erstrecken.

6. Abbildungsvorrichtung nach Anspruch 5, wobei jede Erhebung (620) einen Anstiegsbereich (621) und eine Stirnseite (622) aufweist, wobei der Anstiegsbereich (621) in die Stirnseite (622) mündet, wobei die Stirnseite (622) der umlaufenden Stirnwand (60) der hülsenförmigen Aufnahme (6) abgewandt ist, der umlaufenden Stirnwand (60) der hülsenförmigen Aufnahme (6) in axialer Richtung (X) gegenüberliegt, mit dem Gegeneingriffsmittel (40) in Eingriff steht und vorzugsweise zu der axialen Richtung (X) senkrecht angeordnet ist.

7. Abbildungsvorrichtung nach einem der Ansprüche 1 bis 6, wobei das Gegeneingriffsmittel (40) zumindest einen Vertiefungsbereich (41) und/oder zumindest eine umlaufende Nut (42) umfasst.

8. Abbildungsvorrichtung nach Anspruch 6 und 7, wobei der zumindest eine Vertiefungsbereich (41) nach innen verjüngend ausgebildet ist und eine erste nach außen geschrägte Wand aufweist, die zumindest einen Teil der umlaufenden Stirnfläche (50) bildet und gegen den die umlaufende Stirnwand (60) in die axiale Richtung (X) drückt, wobei die Stirnseite (622) der Erhebung (620) gegen eine zweite nach außen geschrägte Wand des zumindest einen Vertiefungsbereichs (41) in eine der axialen Richtung (X) entgegengesetzte Richtung drückt.

9. Abbildungsvorrichtung nach einem der Ansprüche 1 bis 8, wobei die hülsenförmige Aufnahme (6) aus einem federnden Material, vorzugsweise thermoplastischem Kunststoff, ausgebildet ist und die formschlüssige Verbindung zwischen der Linse (2) und dem Linsenhalter (3) vorzugsweise eine Rastverbindung ist.

10. Abbildungsvorrichtung nach einem der Ansprüche 1 bis 9, wobei die Außenfläche (51) des zweiten Segments (5) der Linse (2) stufenlos verläuft und vorzugsweise die gesamte Lichtaustrittsfläche (20) der Linse (2) umfasst.

11. Abbildungsvorrichtung nach einem der Ansprüche 1 bis 10, wobei die axiale Richtung (X) mit der optischen Achse der Linse (2) zusammenfällt.

12. Abbildungsvorrichtung nach einem der Ansprüche 1 bis 11, wobei an einer Innenseite (70) eines zu der hülsenförmigen Aufnahme (6) komplementären Teilstücks (7) des Linsenhalters (3) eine Beschichtung (8) vorgesehen ist, wobei die Beschichtung (8) vorzugsweise ein wärmewiderstandsfähiges Material umfasst, beispielsweise aus Kunststoff oder Metall ausgebildet ist.

13. Abbildungsvorrichtung nach einem der Ansprüche 1 bis 13, wobei sich das erste Segment (4) in eine der axialen Richtung (X) entgegengesetzte Richtung verjüngt, wobei das erste Segment (4) vorzugsweise pyramidenstumpfförmig ausgebildet ist.

14. Abbildungsvorrichtung nach Anspruch 13, wobei dem ersten Segment (4) zwei Referenzflächen zugeordnet sind, wobei die Referenzflächen einander gegenüberliegen und aufeinander in eine der axialen Richtung entgegengesetzte Richtung zulaufen, vorzugsweise unter einem vorgegebenen Winkel aufeinander zulaufen, wobei der Winkel vorzugsweise in einem Bereich zwischen 3° und 10° liegt.

15. Lichtmodul (100) für einen Kraftfahrzeugscheinwerfer oder Kraftfahrzeugscheinwerfer umfassend zumindest eine Lichtquelle und zumindest eine Abbildungsvorrichtung nach einem der Ansprüche 1 bis 14.
